# EUROPÄISCHE PATENTSCHRIFT

(11) **EP 2 782 830 B1**
(45) Veröffentlichungstag und Bekanntmachung des Hinweises auf die Patenterteilung: **30.03.2016**
(21) Anmeldenummer: 12790792.1
(22) Anmeldetag: 10.11.2012
(51) Int. Cl.: B64D 13/08, B64D 11/04

(54) **VORRICHTUNG ZUM BEHEIZEN EINES ABSCHNITTS EINES KABINENBODENS IN EINER FLUGZEUGKABINE**
DEVICE FOR HEATING A PORTION OF A CABIN FLOOR IN AN AIRCRAFT CABIN
DISPOSITIF DE CHAUFFAGE D'UNE SECTION DU PLANCHER DE LA CABINE D'UN AVION

(30) Priorität: 23.11.2011 DE 102011119364
(43) Veröffentlichungstag der Anmeldung: 01.10.2014
(73) Patentinhaber: Diehl Aerospace GmbH, 88662 Überlingen (DE)
(72) Erfinder: KNEPPLE, Ronny, 88662 Überlingen (DE); STEPH, Bernd, 88662 Überlingen (DE); TRAN, Trong, 91058 Erlangen (DE)
(74) Vertreter: Diehl Patentabteilung
(86) Internationale Anmeldenummer: PCT/EP2012/004684
(87) Internationale Veröffentlichungsnummer: WO 2013/075795

(56) Entgegenhaltungen:
- WO-A1-2005/063570
- WO-A2-2011/003723
- DE-A1-102005 054 883

## Beschreibung

Die Erfindung betrifft eine Vorrichtung zum Beheizen eines Abschnitts eines Kabinenbodens in einer Flugzeugkabine (wie z.B. aus WO2005/063570 bekannt).

In Passagierflugzeugen befinden sich Bordküchen meist in der Nähe von Türen. Unterhalb von Bordküchen befinden sich in der Regel Stauräume für Notrutschen. Die Türen und die Stauräume bilden jeweils eine Kältebrücke. Infolge dessen ist der Kabinenboden insbesondere im Bereich einer Bordküche während des Flugbetriebs kalt.

Aus der DE 10 2005 054 883 A1 ist es bekannt, die Abwärme einer Brennstoffzelle für die Zubereitung von Heißgetränken zu nutzen. Überschüssige Abwärme wird über einen Außenkühler an die Umgebung abgeführt.

Weiterhin ist es bekannt, die Stauräume der Notrutschen elektrisch zu beheizen. Die Energie dafür wird mittels Generatoren erzeugt, die durch die Haupt- bzw. Hilfstriebwerke angetrieben werden. Das hat den Nachteil, dass Heizelemente nahe der Notrutschen installiert werden müssen. Die Heizelemente erfordern eine aufwändige Verkabelung. Zudem erhöht sich der Treibstoffverbrauch der Haupt- bzw. Hilfstriebwerke.

Aufgabe der Erfindung ist es, die Nachteile nach dem Stand der Technik zu beseitigen. Es soll insbesondere eine Vorrichtung angegeben werden, mit der einfach und effizient ein Abschnitt eines Kabinenbodens einer Flugzeugkabine beheizt werden kann. Insbesondere soll die Vorrichtung unabhängig vom Bordnetz betreibbar sein.

Diese Aufgabe wird durch die Merkmale des Anspruchs 1 gelöst. Zweckmäßige Ausgestaltungen ergeben sich aus den Merkmalen der Ansprüche 2 bis 14.

Nach Maßgabe der Erfindung umfasst eine Vorrichtung zum Beheizen eines Abschnitts des Kabinenbodens in einer Flugzeugkabine eine Brennstoffzelle und eine Abführvorrichtung. Der Kabinenboden weist eine begehbare Oberseite und eine der Oberseite gegenüberliegende Unterseite auf. Mit der Abführvorrichtung wird ein durch Abwärme der Brennstoffzelle erwärmtes Fluid von der Brennstoffzelle abgeführt und einem an die Unterseite des Kabinenbodens angrenzenden oder im Kabinenboden befindlichen Hohlraum zugeführt, so dass der Abschnitt des Kabinenbodens erwärmt wird. Damit kann der zu erwärmende Abschnitt des Kabinenbodens vorteilhafterweise unabhängig vom Bordnetz beheizt werden. Die beim Betrieb einer Brennstoffzelle anfallende Abwärme wird erfindungsgemäß mittels der Abführvorrichtung zielgerichtet dem zu erwärmenden Abschnitt des Kabinenbodens zugeführt. Die vorgeschlagene Beheizung des Kabinenbodenabschnitts ist besonders effizient.

Bei der Brennstoffzelle kann es sich um einen beliebigen Brennstoffzellentyp, insbesondere um eine Protonenaustauschmembran-Brennstoffzelle (PEM- Brennstoffzelle), handeln. Der Brennstoffzelle kann ein Methanol-Reformer vorgeschaltet sein, so dass Methanol als Energieträger genutzt werden kann. In diesem Fall muss zum Betrieb der Brennstoffzelle vorteilhafterweise kein explosiver Wasserstoff im Flugzeug mitgeführt werden. Weiterhin kann es sich bei der Brennstoffzelle um eine Hochtemperatur-Brennstoffzelle (HT-Brennstoffzelle) handeln, welcher eine Niedertemperatur-Brennstoffzelle (NT-Brennstoffzelle) vorgeschaltet ist. Auf diese Weise entsteht ein kaskadiertes System, bei welchem die Abluft der NT-Brennstoffzelle als Zuluft für die HT-Brennstoffzelle genutzt werden kann. Es ist auch vorstellbar, dass einer HT-Brennstoffzelle zumindest eine weitere HT-Brennstoffzelle und/oder zumindest eine NT-Brennstoffzelle vorgeschaltet sind.

Der Abschnitt des Kabinenbodens kann den Boden einer Bordküche bilden. Damit können die Arbeitsbedingungen für die Flugbegleiter verbessert werden.

Die Brennstoffzelle kann auf dem Abschnitt des Kabinenbodens abgestützt sein. In diesem Fall kann die Abführvorrichtung besonders kompakt ausgestaltet werden.

Das Fluid kann Luft sein. Luft ist ungefährlich und in der Flugzeugkabine verfügbar.

Der Hohlraum kann durch zumindest einen in den Kabinenboden integrierten Kanal gebildet sein. Stromabwärts der Abführvorrichtung kann sich der Kanal in mehrere Kanäle verzweigen. Insbesondere können die Kanäle parallel zueinander verlaufen. Der Kanal kann auch meanderförmig ausgebildet sein. Der Kanal kann dabei insbesondere durch zumindest einen Schlauch gebildet sein.

Der Hohlraum kann durch einen an die Unterseite des Kabinenbodens angrenzenden Notrutschen-Stauraum gebildet sein. Es kann z.B. durch die Abwärme der Brennstoffzelle erwärmte Luft in den Notrutschen-Stauraum eingeleitet werden. Somit können die Notrutschen oberhalb einer für den störungsfreien Betrieb erforderlichen Mindesttemperatur gehalten werden. Der Kabinenboden kann bei einer geeigneten Wärmeleitfähigkeit und Wärmekapazität so ausgestaltet sein, dass die in den Notrutschen-Stauraum eingeleitete erwärmte Luft zugleich ein Beheizen des an den Notrutschen-Stauraum angrenzenden Kabinenbodens bewirkt. Es ist aber auch möglich, sowohl den Hohlraum im Notrutschen-Stauraum als auch die in den Kabinenboden integrierten Kanäle direkt zu beheizen. Dazu kann ein Teil der durch die Abwärme der Brennstoffzelle erwärmten Luft in in den Kabinenboden integrierte Kanäle eingeleitet werden, während ein anderer Teil in den Notrutschen-Stauraum eingeleitet wird. Es ist aber auch möglich, dass durch die Abwärme der Brennstoffzelle erwärmte Luft zuerst in in den Kabinenboden integrierte Kanäle eingeleitet wird, wobei sie an der Unterseite des Kabinenbodens austritt und von dort aus in den Notrutschen-Stauraum eintritt und diesen erwärmt.

Die Brennstoffzelle kann in einem Trolley herkömmlicher Bemaßung aufgenommen sein, welcher auswechselbar in einem dafür vorgesehenen Einschubabschnitt der Bordküche aufgenommen ist. Ein derartiger Trolley kann schnell und einfach gegen einen anderen Trolley ausgewechselt werden.

Es kann sich zumindest ein Tank im gleichen Trolley wie die Brennstoffzelle befinden. Der Tank kann für Brennstoffe, wie beispielsweise Ethanol, Methanol, Wasserstoff oder für Sauerstoff vorgesehen sein. Es ist aber auch vorstellbar, dass sich die Brennstoffzelle und zumindest ein Tank in zwei verschiedenen Trolleys befinden, welche durch eine Brennstoffleitung miteinander verbunden werden können.

Ein Trolley mit leerem Tank bzw. mit einer wartungsbedürftigen Brennstoffzelle kann durch einen anderen Trolley mit vollem Tank bzw. mit einer gewarteten Brennstoffzelle ausgewechselt werden. Das Füllen des Tanks sowie die Wartung der wartungsbedürftigen Brennstoffzelle können außerhalb des Flugzeugs vorgenommen werden. Betanken und Wartung brauchen also nicht während des Aufenthalts des Flugzeugs an einem Flughafen zu erfolgen. Weiterhin braucht keine Rücksicht auf die Wartungsintervalle der festinstallierten Kabinentechnik genommen werden.

Die Abführvorrichtung kann einen ersten und einen zweiten Abschnitt aufweisen. Der erste Abschnitt kann fest mit der Brennstoffzelle verbunden sein. Der zweite Abschnitt kann fest mit dem Kabinenboden verbunden sein. Die Abführvorrichtung kann weiterhin eine Kupplung zum lösbaren Verbinden des ersten und des zweiten Abschnitts aufweisen. Durch die Kupplung können der erste und der zweite Abschnitt miteinander verbunden werden. Insbesondere kann die Kupplung beim Einrasten des die Brennstoffzelle aufnehmenden Trolleys in eine Halteposition automatisch die Brennstoffzelle mit dem zweiten Abschnitt der Abführvorrichtung verbinden. Das erleichtert die Handhabung.

Die Abführvorrichtung kann mit einem Gebläse zur Förderung des Fluids versehen sein. Somit kann sichergestellt werden, dass das Fluid ständig von der Brennstoffzelle zum Hohlraum transportiert wird.

Die Abführvorrichtung kann einen Heißluftkanal zum Abführen der durch die Abwärme der Brennstoffzelle erhitzten Luft zu einem ersten Küchengerät und einen Warmluftkanal zum Ableiten der erwärmten Luft vom ersten Küchengerät zum Hohlraum aufweisen. Die Abführvorrichtung kann weiterhin eine erste Leitung zum Abführen der erwärmten Luft vom ersten Küchengerät zu einem zweiten Küchengerät aufweisen. Die Abführvorrichtung kann zumindest eine weitere Leitung zum Leiten der erwärmten Luft jeweils von einem vorhergehenden Küchengerät zu einem weiteren Küchengerät aufweisen. Die Küchengeräte in der Bordküche besitzen zum Teil unterschiedliche Arbeitstemperaturen. Daher werden die Küchengeräte vorteilhafterweise in absteigender Reihenfolge ihrer Arbeitstemperaturen mit erwärmter Luft versorgt. Küchengeräte können Hybride sein, die ihre Energie aus mehreren Quellen beziehen können, insbesondere aus elektrischer und thermischer Energie. Die intelligente Nutzung der Abwärme ermöglicht eine hohe Energieeffizienz für die Verwendung einer Brennstoffzelle in der Bordküche eines Flugzeugs.

Zur Versorgung der Brennstoffzelle mit Kabinenluft kann ein Ansaugstutzen vorgesehen ein. Es ist aber auch möglich, die Luft, welche die Küchengeräte und/oder den Hohlraum durchströmt hat, erneut der Brennstoffzelle zur Verfügung zu stellen. Auf diese Weise kann ein zumindest weitgehend geschlossener Kreislauf gebildet werden.

Nachfolgend werden Ausgestaltungen der Erfindung anhand der Zeichnungen näher erläutert. Es zeigen:
- Fig. 1: eine schematische Teilschnittdarstellung einer erfindungsgemäßen Vorrichtung,
- Fig. 2A: eine schematische Längsschnittdarstellung eines erfindungsgemäßen Abschnitts des Kabinenbodens gemäß C-C' in Fig. 3A,
- Fig. 2B: eine schematische Längsschnittdarstellung eines erfindungsgemäßen Abschnitts des Kabinenbodens gemäß D-D' in Fig. 3B,
- Fig. 3A: eine schematische Querschnittdarstellung eines erfindungsgemäßen Abschnitts des Kabinenbodens gemäß A-A' in Fig. 2A,
- Fig. 3B: eine schematische Querschnittdarstellung eines erfindungsgemäßen Abschnitts des Kabinenbodens gemäß B-B' in Fig. 2B und
- Fig. 4: ein Flussdiagramm zur Veranschaulichung der Versorgung von Küchengeräten mit erhitzter Luft.

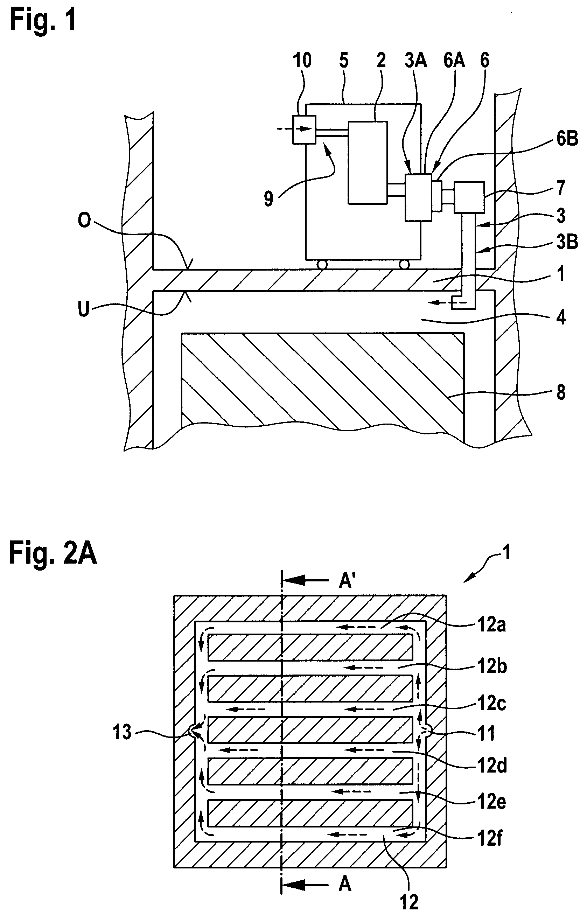

Fig. 1 zeigt schematisch eine erfindungsgemäße Anordnung zum Beheizen eines Abschnitts des Kabinenbodens 1 in einer Flugzeugkabine. Der Kabinenboden 1 weist eine begehbare Oberseite O und eine der Oberseite O gegenüberliegende Unterseite U auf. Die erfindungsgemäße Anordnung umfasst eine Brennstoffzelle 2 und eine Abführvorrichtung 3 mit einem ersten 3A und einem zweiten Abschnitt 3B. Der erste Abschnitt 3A ist fest mit der Brennstoffzelle 2 und der zweite Abschnitt 3B fest mit dem Kabinenboden 1 verbunden. Der erste Abschnitt 3A weist ein erstes Kupplungsteil 6A und der zweite Abschnitt 3B ein zweites Kupplungsteil 6B auf. Das erste Kupplungsteil 6A und das zweite Kupplungsteil 6B bilden eine Kupplung 6, welche den ersten 3A und den zweiten Abschnitt 3B lösbar verbindet.

Die Brennstoffzelle 2 und der erste Abschnitt 3A sind in einem Trolley 5 aufgenommen. Der Trolley 5 weist die gleichen Außenabmessungen auf wie ein Bordküchen-Trolley, der in einem Flugzeug zur Aufnahme von Speisen, Getränken, Abfall, etc. eingesetzt wird. Das erste Kupplungsteil 6A ist im Bereich eines beliebigen Teils einer äußeren Verkleidung des Trolleys 5 angeordnet, insbesondere an einer Hinterseite des Trolleys 5. Das erste Kupplungsteil 6A kann auch an einer rechten bzw. linken Seite des Trolleys 5 oder an einer Unterseite bzw. Oberseite des Trolleys 5 vorgesehen sein. Das erste Kupplungsteil 6A kann insbesondere so ausgestaltet sein, dass es nicht aus der äußeren Verkleidung des Trolleys 5 hervorsteht. Der Trolley 5 ist auswechselbar in einem dafür vorgesehenen Einschubabschnitt der Bordküche aufgenommen. Im Einschubabschnitt der Bordküche befindet sich fest installiert der zweite Abschnitt 3B der Abführvorrichtung 3 mit dem zweiten Kupplungsteil 6B.

In der Ausgestaltung nach Fig. 1 weist der Trolley 5 weiterhin eine Zuführvorrichtung 9 zur Zufuhr von Kabinenluft zur Brennstoffzelle 2 auf. Die Zuführvorrichtung 9 weist an ihrem ersten Ende einen Ansaugstutzen 10 auf. An ihrem zweiten Ende ist die Zuführvorrichtung 9 fest mit der Brennstoffzelle 2 verbunden.

Die Abführvorrichtung 3 ist mit einem Gebläse 7 zur Förderung von heißer Abluft aus der Brennstoffzelle 2 in einen Hohlraum 4 versehen. Der Hohlraum 4 grenzt in der Ausgestaltung nach Fig. 1 an die Unterseite U des zu beheizenden Abschnitts des Kabinenbodens 1 an. Zusätzlich ist im Hohlraum 4 eine Notrutsche 8 aufgenommen.

Der Hohlraum 4 kann sich aber auch im Kabinenboden 1 befinden. Fig. 2A zeigt eine schematische Längsschnittdarstellung eines erfindungsgemäßen Abschnitts des Kabinenbodens 1. Der Hohlraum 4 wird dabei durch in den Kabinenboden 1 integrierte Kanäle 12a, 12b, 12c, 12d , 12e, 12f gebildet. Dazu weist der Kabinenboden 1 einen mit dem zweiten Abschnitt 3B der Abführvorrichtung 3 verbundenen Kanaleinlass 11 auf. Vom Kanaleinlass 11 geht ein Kanal 12 aus. Der Kanal 12 verzweigt in einzelne Kanäle 12a, 12b, 12c, 12d , 12e, 12f. Die einzelnen Kanäle 12a, 12b, 12c, 12d , 12e, 12f münden in einen Kanalauslass 13.

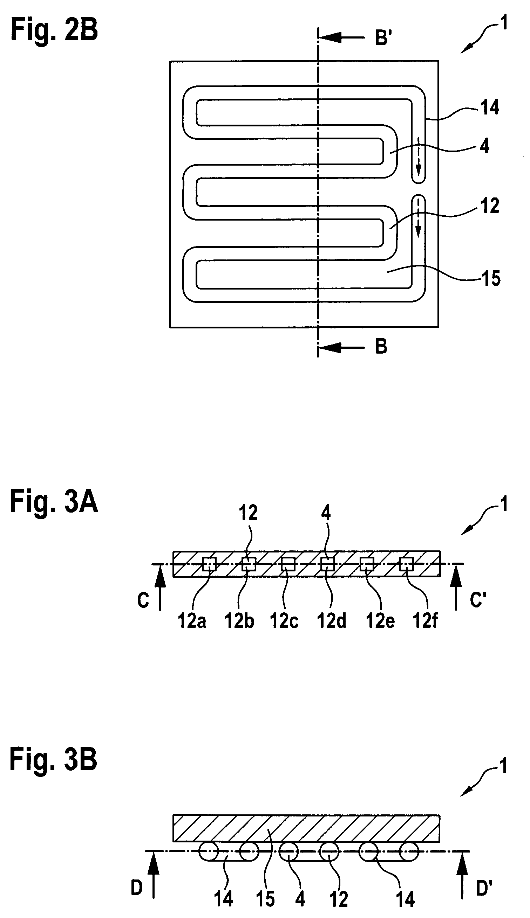

Fig. 2B zeigt eine schematische Längsschnittdarstellung eines weiteren erfindungsgemäßen Abschnitts des Kabinenbodens 1. In diesem Ausführungsbeispiel ist der Kanal 12 meanderförmig ausgebildet. Dazu kann der Kabinenboden 1 einen Schlauch 14 und eine Bodenstruktur 15 umfassen. Der Schlauch 14 kann an der Unterseite der Bodenstruktur 15 befestigt sein. Alternativ kann der Schlauch 14 aber auch im Inneren des Kabinenbodens 1 verlaufen.

Fig. 3A zeigt eine schematische Querschnittdarstellung eines erfindungsgemäßen Abschnitts des Kabinenbodens 1 gemäß A-A' in Fig. 2A. In den Kabinenboden 1 sind einzelne Kanäle 12a, 12b, 12c, 12d , 12e, 12f integriert, welche miteinander verbunden sind und den Hohlraum 4 bilden. Fig. 3B zeigt eine schematische Querschnittdarstellung eines erfindungsgemäßen Abschnitts des Kabinenbodens 1 gemäß B-B' in Fig. 2B. Der Kabinenboden 1 umfasst hier einen Schlauch 14 und eine Bodenstruktur 15. Der Schlauch 14 ist dabei an der Unterseite der Bodenstruktur 15 befestigt.

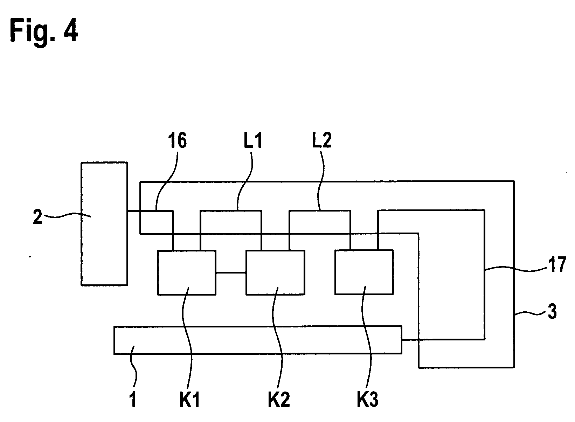

Fig. 4 zeigt den Weg der erhitzten Luft in der Form eines Flussdiagramms. In der Bordküche eingesetzte Küchengeräte K1, K2, K3 können Hybridgeräte sein, welche sowohl mit elektrischer Energie als auch mit thermischer Energie versorgt werden können. Die durch die Abwärme der Brennstoffzelle 2 erhitzte Luft kann daher auch für die Versorgung von Küchengeräten verwendet werden. Die Abführvorrichtung 3 umfasst gemäß Fig. 4 zumindest weitgehend eine Heißluftleitung 16, eine erste Leitung L1, eine zweite Leitung L2 und eine Warmluftleitung 17.

Im Folgenden wird die Funktion der erfindungsgemäßen Anordnung näher erläutert. Mit der Abführvorrichtung 3 wird durch Abwärme der Brennstoffzelle 2 erhitzte Luft mit Hilfe des Gebläses 7 von der Brennstoffzelle 2 abgeführt und einem an die Unterseite U des Kabinenbodens 1 angrenzenden oder im Kabinenboden 1 befindlichen Hohlraum 4 zugeführt. Die dem Hohlraum 4 zugeführte Luft gibt ihre Wärme an den Abschnitt des Kabinenbodens 1 ab. Der Kabinenboden 1 speichert die Wärme und leitet sie an seine Oberseite O. Dazu enthält der Kabinenboden 1 sowohl Bestandteile mit einer hohen Wärmekapazität als auch Bestandteile mit einer hohen Wärmeleitfähigkeit. Der Kabinenboden 1 kann dazu eine Struktur als Aluminium aufweisen. Aluminium besitzt eine hohe Wärmekapazität und leitet gut Wärme.

Das Gebläse 7 saugt die durch die Brennstoffzelle 2 erwärmte Luft an und bläst sie über eine weitere im zweiten Abschnitt 3B der Abführvorrichtung 3 vorgesehenen Leitung in den Hohlraum 4.

Durch den Ansaugstutzen 10 kann Kabinenluft zur Versorgung der Brennstoffzelle 2 angesaugt werden. Darüberhinaus ist es auch möglich, die Zuführvorrichtung 9 so auszugestalten, dass die durch die Abführvorrichtung 3 in den Hohlraum 4 geleitete Luft nach Durchlaufen des Hohlraums 4 wieder aus dem Hohlraum 4 abgesaugt und zur Versorgung der Brennstoffzelle 2 wiederverwendet wird. Es kann also ein Luftkreislauf vorgesehen werden. Dabei ist ein geschlossener Luftkreislauf denkbar. Dem Luftkreislauf kann aber auch zusätzlich Kabinenluft oder in einem Tank aufgenommener Sauerstoff zugeführt werden.

Die Wartung der Brennstoffzelle 2 sowie das Auffüllen des Brennstoffs eines (nicht dargestellten) im Trolley 5 vorgesehenen Tanks erfolgt nach dem Entfernen des Trolleys 5 aus dem Flugzeug. Beim Einschieben des Trolleys 5 rastet das erste Kupplungsteil 6A automatisch in das im Einschubabschnitt vorgesehene zweite Kupplungsteil 6B ein. Auch das Trennen des ersten Kupplungsteils 6A vom zweiten Kupplungsteil 6B zum Entfernen des Trolleys 5 vom Einschubabschnitt kann automatisch erfolgen.

Gemäß den Figuren 2A, 2B, 3A und 3B können Kanäle 12a, 12b, 12c, 12d , 12e, 12f bzw. ein Schlauch 14 den Hohlraum 4 bilden. Die durch die Brennstoffzelle 2 erwärmte Luft wird dann durch die Abführvorrichtung 3 gemäß Fig. 2A in den Kanaleinlass 11 eingeleitet und verteilt sich über die einzelnen Kanäle 12a, 12b, 12c, 12d , 12e, 12f. Alternativ wird sie gemäß Fig. 2B in den Schlauch 14 eingeleitet und durchläuft den Schlauch 14. Beim Durchlaufen der Kanäle 12a, 12b, 12c, 12d , 12e, 12f bzw. des Schlauchs 14 gibt die Luft Wärme an den Kabinenboden 1 ab.

Die Kanäle 12a, 12b, 12c, 12d , 12e, 12f und/oder der Schlauch 14 können mit einem an die Unterseite U des Kabinenbodens angrenzenden Notrutschen-Stauraum kommunizieren, so dass deren Inneres und der Notrutschen-Stauraum den Hohlraum 4 bilden und die Luft nach Durchlaufen der Kanäle 12a, 12b, 12c, 12d , 12e, 12f und/oder des Schlauchs 14 in den Notrutschen-Stauraum strömt. Die Luft kann nach dem Durchlaufen der Kanäle 12a, 12b, 12c, 12d , 12e, 12f und/oder des Schlauchs 14 bzw. nach dem Durchströmen durch den Notrutschen-Stauraum in eine Zuführvorrichtung 9 geleitet werden, welche die Luft wieder der Brennstoffzelle 2 zuführt, oder zur Kabinenluft entlassen werden.

Im Folgenden wird die Funktion der Abführvorrichtung 3 gemäß Fig. 4 beschrieben. Die durch die Abwärme der Brennstoffzelle 2 erhitzte Luft gelangt durch die Heißluftleitung 16 in ein erstes Küchengerät K1, vom ersten Küchengerät K1 durch die erste Leitung L1 zu einem zweiten Küchengerät K2, vom zweiten Küchengerät K2 durch die zweite Leitung L2 zu einem dritten Küchengerät K3 und schließlich durch die Warmluftleitung 17 zum Kabinenboden 1. Die erhitze Luft gibt dabei jeweils Wärme ab, kühlt sich also sukzessive ab. Bei den Küchengeräten kann es sich beispielsweise um einen Ofen, Warmwasserboiler, etc. handeln. Die Küchengeräte besitzen in der Regel unterschiedliche Arbeitstemperaturen. Daher ist es vorteilhaft, die Reihenfolge der Küchengeräte so zu wählen, dass die Arbeitstemperatur eines später versorgten Küchengeräts die Arbeitstemperatur eines zuvor versorgten Küchengeräts nicht übersteigt. In der veranschaulichten Ausgestaltung besitzt das erste Küchengerät K1 die höchste Arbeitstemperatur, das zweite Küchengerät K2 die zweithöchste Arbeitstemperatur und das dritte Küchengerät K3 die dritthöchste Arbeitstemperatur.

Im Folgenden werden weitere Vorteile der erfindungsgemäßen Anordnung beschrieben. Indem der Kabinenboden 1 Wärme speichern kann, ist die Temperatur an der Oberseite O des zu beheizenden Abschnitts des Kabinenbodens 1 unabhängig von der jeweils aktuellen Wärmeerzeugung der Brennstoffzelle 2. Üblichen Schwankungen in der Wärmeerzeugung der Brennstoffzelle 2 haben daher keinen merklichen Einfluss auf die Temperatur an der Oberseite O des zu beheizenden Abschnitts des Kabinenbodens 1.

Durch das Beheizen des Notrutschen-Stauraums kann verhindert werden, dass die Notrutsche 8 größeren Temperaturschwankungen ausgesetzt ist. Dadurch bleibt die Notrutsche 8 geschmeidig und länger haltbar.

Die Handhabung der Brennstoffzelle 2 ist durch Aufnahme in einen Trolley 5 besonders einfach.

### Bezugszeichenliste

- 1: Kabinenboden
- 2: Brennstoffzelle
- 3: Abführvorrichtung
- 3A: erster Abschnitt
- 3B: zweiter Abschnitt
- 4: Hohlraum
- 5: Trolley
- 6: Kupplung
- 6A: erstes Kupplungsteil
- 6B: zweites Kupplungsteil
- 7: Gebläse
- 8: Notrutsche
- 9: Zuführvorrichtung
- 10: Ansaugstutzen
- 11: Kanaleinlass
- 12: Kanal
- 12a-f: Kanäle
- 13: Kanalauslass
- 14: Schlauch
- 15: Bodenstruktur
- 16: Heißluftkanal
- 17: Warmluftkanal
- K1: erstes Küchengerät
- K2: zweites Küchengerät
- K3: drittes Küchengerät
- L1: erste Leitung
- L2: zweite Leitung
- O: Oberseite
- U: Unterseite

## Patentansprüche

1. Anordnung zum Beheizen eines Abschnitts des Kabinenbodens (1) in einer Flugzeugkabine, wobei der Kabinenboden (1) eine begehbare Oberseite (O) und eine der Oberseite (O) gegenüberliegende Unterseite (U) aufweist, umfassend
einen an die Unterseite (U) des Kabinenbodens (1) angrenzenden oder im Kabinenboden (1) befindlichen Hohlraum (4) und
eine Brennstoffzelle (2) und mit dieser verbunden oder verbindbar
eine Abführvorrichtung (3), welche derart ausgebildet ist, dass durch Abwärme der Brennstoffzelle (2) erwärmte Luft von der Brennstoffzelle (2) abgeführt und dem mit der Abführvorrichtung (3) gekoppelten Hohlraum (4) zugeführt werden kann, derart, dass die dem Hohlraum zugeführte Luft ihre Wärme an den Abschnitt des Kabinenbodens (1) abgibt, so dass der Kabinenboden (1) die Wärme speichert und an seine Oberseite leitet, so dass der Abschnitt des Kabinenbodens (1) zielgerichtet beheizt wird, wobei die Brennstoffzelle (2) in einem Trolley (5) herkömmlicher Bemaßung aufgenommen ist, welcher auswechselbar in einem dafür vorgesehenen Einschubabschnitt der Bordküche aufgenommen ist.

2. Anordnung nach Anspruch 1, wobei der Abschnitt des Kabinenbodens (1) den Boden einer Bordküche bildet.

3. Anordnung nach Anspruch 1 oder 2, wobei die Brennstoffzelle (2) auf dem Abschnitt des Kabinenbodens (1) abgestützt ist.

4. Anordnung nach einem der vorhergehenden Ansprüche, wobei der Hohlraum (4) durch zumindest einen in den Kabinenboden (1) integrierten Kanal (12) gebildet wird.

5. Anordnung nach einem der vorhergehenden Ansprüche, wobei der Kanal (12) meanderförmig ausgebildet ist.

6. Anordnung nach einem der vorhergehenden Ansprüche, wobei der Hohlraum (4) durch einen an die Unterseite (U) des Kabinenbodens (1) angrenzenden Notrutschen-Stauraum gebildet wird.

7. Anordnung nach einem der vorhergehenden Ansprüche, wobei die Abführvorrichtung (3) einen ersten (3A) und einen zweiten Abschnitt (3B) aufweist.

8. Anordnung nach Anspruch 7, wobei der erste Abschnitt (3A) fest mit der Brennstoffzelle (2) und der zweite Abschnitt (3B) fest mit dem Kabinenboden (1) verbunden ist.

9. Anordnung nach einem der Ansprüche 7 oder 8, wobei die Abführvorrichtung (3) eine Kupplung (6) zum lösbaren Verbinden des ersten (3A) mit dem zweiten Abschnitt (3B) aufweist.

10. Anordnung nach einem der vorhergehenden Ansprüche, wobei die Abführvorrichtung (3) mit einem Gebläse (7) zur Förderung der Luft versehen ist.

11. Anordnung nach einem der vorhergehenden Ansprüche, wobei die Abführvorrichtung (3) einen Heißluftkanal (16) zum Abführen der durch die Abwärme der Brennstoffzelle (2) erhitzten Luft zu einem ersten Küchengerät (K1) und einen Warmluftkanal (17) zum Ableiten der erwärmten Luft vom ersten Küchengerät (K1) zum Hohlraum (4) aufweist.

12. Anordnung nach einem der vorhergehenden Ansprüche, wobei die Abführvorrichtung (3) eine erste Leitung (L1) zum Abführen der erwärmten Luft vom ersten Küchengerät (K1) zu einem zweiten Küchengerät (K2) aufweist.

13. Anordnung nach einem der vorhergehenden Ansprüche, wobei die Abführvorrichtung (3) zumindest eine weitere Leitung zum Leiten der erwärmten Luft jeweils von einem vorhergehenden Küchengerät zu einem weiteren Küchengerät aufweist.

14. Anordnung nach einem der vorhergehenden Ansprüche, wobei ein Ansaugstutzen (10) zur Versorgung der Brennstoffzelle (2) mit Kabinenluft vorgesehen ist.

## Claims

1. Arrangement for heating a portion of the cabin floor (1) in an aircraft cabin, wherein the cabin floor (1) has an upper side (0) which can be walked on and a lower side (U) opposite the upper side (0), comprising a cavity (4) which is adjacent to the lower side (U) of the cabin floor (1) or is located in the cabin floor (1) and a fuel cell (2) and, connected or connectable thereto, a removal device (3) which is configured such that air heated by waste heat of the fuel cell (2) can be removed from the fuel cell (2) and supplied to the cavity (4) which is coupled to the removal device (3) in such a manner that the air supplied to the cavity outputs its heat to the portion of the cabin floor (1), and therefore the cabin floor (1) stores the heat and conducts same to the upper side thereof such that the portion of the cabin floor (1) is heated in a targeted manner, wherein the fuel cell (2) is accommodated in a conventionally sized trolley (5) which is accommodated exchangeably in an insertion section provided for this purpose in the on-board galley.

2. Arrangement according to Claim 1, wherein the portion of the cabin floor (1) forms the floor of an on-board galley.

3. Arrangement according to Claim 1 or 2, wherein the fuel cell (2) is supported on the portion of the cabin floor (1).

4. Arrangement according to one of the preceding claims, wherein the cavity (4) is formed by at least one duct (12) integrated in the cabin floor (1).

5. Arrangement according to one of the preceding claims, wherein the duct (12) is of meandering design.

6. Arrangement according to one of the preceding claims, wherein the cavity (4) is formed by an escape chute stowage space adjacent to the lower side (U) of the cabin floor (1).

7. Arrangement according to one of the preceding claims, wherein the removal device (3) has a first portion (3A) and a second portion (3B).

8. Arrangement according to Claim 7, wherein the first portion (3A) is fixedly connected to the fuel cell (2) and the second portion (3B) is fixedly connected to the cabin floor (1).

9. Arrangement according to either of Claims 7 and 8, wherein the removal device (3) has a coupling (6) for the releasable connection of the first portion (3A) to the second portion (3B).

10. Arrangement according to one of the preceding claims, wherein the removal device (3) is provided with a fan (7) for conveying the air.

11. Arrangement according to one of the preceding claims, wherein the removal device (3) has a hot air duct (16) for removing the air heated by the waste heat of the fuel cell (2) to a first kitchen appliance (K1) and a warm air duct (17) for conducting the heated air from the first kitchen appliance (K1) to the cavity (4).

12. Arrangement according to one of the preceding claims, wherein the removal device (3) has a first line (L1) for removing the heated air from the first kitchen appliance (K1) to a second kitchen appliance (K2).

13. Arrangement according to one of the preceding claims, wherein the removal device (3) has at least one further line for conducting the heated air in each case from a preceding kitchen appliance to a further kitchen appliance.

14. Arrangement according to one of the preceding claims, wherein an intake pipe (10) is provided for supplying the fuel cell (2) with cabin air.

## Revendications

1. Dispositif de chauffage d'une section du plancher de cabine (1) de la cabine d'un avion, dans lequel le plancher de cabine (1) présente un côté supérieur praticable (0) et un côté inférieur (U) opposé au côté supérieur (0), comprenant
- un espace creux (4) adjacent au côté inférieur (U) du plancher de cabine (1) ou se trouvant dans le plancher de cabine (1) et
- une pile à combustible (2) et, relié ou pouvant être relié à celle-ci,
- un dispositif d'évacuation (3), qui est configuré de telle manière que de l'air échauffé par la chaleur perdue de la pile à combustible (2) puisse être évacué de la pile à combustible (2) et être fourni à l'espace creux (4) couplé au dispositif d'évacuation (3), de telle manière que l'air fourni à l'espace creux cède sa chaleur à la section du plancher de cabine (1), de telle manière que le plancher de cabine (1) accumule la chaleur et la conduise à son côté supérieur, de telle manière que la section du plancher de cabine (1) soit chauffée de façon ciblée, dans lequel la pile à combustible (2) est logée dans un chariot (5) de dimensions conventionnelles, qui est logé de façon interchangeable dans une section d'insertion prévue à cet effet de la cuisine de bord.

2. Dispositif selon la revendication 1, dans lequel la section du plancher de cabine (1) forme le plancher d'une cuisine de bord.

3. Dispositif selon la revendication 1 ou 2, dans lequel la pile à combustible (2) est supportée sur la section du plancher de cabine (1).

4. Dispositif selon l'une quelconque des revendications précédentes, dans lequel l'espace creux (4) est formé par au moins un canal (12) intégré dans le plancher de cabine (1).

5. Dispositif selon l'une quelconque des revendications précédentes, dans lequel le canal (12) est de forme sinueuse.

6. Dispositif selon l'une quelconque des revendications précédentes, dans lequel l'espace creux (4) est formé par un espace de rangement de toboggans d'évacuation adjacent au côté inférieur (U) du plancher de cabine (1).

7. Dispositif selon l'une quelconque des revendications précédentes, dans lequel le dispositif d'évacuation (3) présente une première section (3A) et une deuxième section (3B).

8. Dispositif selon la revendication 7, dans lequel la première section (3A) est assemblée solidairement à la pile à combustible (2) et la deuxième section (3B) est assemblée solidairement au plancher de cabine (1).

9. Dispositif selon l'une des revendications 7 ou 8, dans lequel le dispositif d'évacuation (3) présente un couplage (6) pour la liaison détachable de la première section (3A) avec la deuxième section (3B).

10. Dispositif selon l'une quelconque des revendications précédentes, dans lequel le dispositif d'évacuation (3) est muni d'un ventilateur (7) pour le transport de l'air.

11. Dispositif selon l'une quelconque des revendications précédentes, dans lequel le dispositif d'évacuation (3) présente un canal d'air chaud (16) pour l'évacuation de l'air échauffé par la chaleur perdue de la pile à combustible (2) vers un premier appareil de cuisine (K1) et un canal d'air chaud (17) pour la déviation de l'air échauffé du premier appareil de cuisine (K1) vers l'espace creux (4).

12. Dispositif selon l'une quelconque des revendications précédentes, dans lequel le dispositif d'évacuation (3) présente une première conduite (L1) pour l'évacuation de l'air échauffé du premier appareil de cuisine (K1) vers un deuxième appareil de cuisine (K2) .

13. Dispositif selon l'une quelconque des revendications précédentes, dans lequel le dispositif d'évacuation (3) présente au moins une autre conduite pour amener l'air échauffé chaque fois d'un appareil de cuisine précédent à un autre appareil de cuisine.

14. Dispositif selon l'une quelconque des revendications précédentes, dans lequel il est prévu un tuyau d'aspiration (10) pour l'alimentation de la pile à combustible (2) en air de la cabine.
